# EUROPEAN PATENT SPECIFICATION

(11) **EP 3 342 580 B1**
(45) Date of publication and mention of the grant of the patent: **14.04.2021**
(21) Application number: 16838742.1
(22) Date of filing: 15.07.2016
(51) Int. Cl.: B29C 49/46, B29C 49/12

(54) **CONTAINER MOLDING APPARATUS AND CONTAINER MOLDING METHOD**
VORRICHTUNG ZUM FORMEN EINES BEHÄLTERS UND VERFAHREN ZUM FORMEN EINES BEHÄLTERS
APPAREIL DE MOULAGE DE CONTENEUR ET PROCÉDÉ DE MOULAGE DE CONTENEUR

(30) Priority: 27.08.2015 JP 2015168217
(43) Date of publication of application: 04.07.2018
(73) Proprietor: Yoshino Kogyosho Co., Ltd., Tokyo 136-8531 (JP)
(72) Inventor: OKUYAMA, Yuichi, Isehara-shi Kanagawa 259-1103 (JP)
(74) Representative: Murgitroyd & Company
(86) International application number: PCT/JP2016/003355
(87) International publication number: WO 2017/033390

(56) References cited:
- EP-A1- 2 987 597
- EP-A1- 2 987 610
- EP-B1- 2 001 648
- WO-A1-2014/127876
- WO-A1-2014/127876
- WO-A1-2014/127903
- WO-A1-2014/209339
- WO-A1-2015/079627
- DE-A1-102011 015 666
- JP-A- H0 259 318
- JP-A- S5 378 267
- JP-A- 2015 199 547
- JP-A- 2015 506 288

## Description

### TECHNICAL FIELD

The present disclosure relates to a container molding apparatus and a container molding method both of which mold a preform formed of a thermoplastic resin into a container having a predetermined shape.

### BACKGROUND

Resin-made containers, typical examples of which are polypropylene (PP) bottles and poly-ethylene terephthalate (PET) bottles, are used to contain a variety of liquids, such as a beverage, a cosmetic product, a pharmaceutical product, a detergent, and shampoo. Such a container is generally produced by blow molding into a predetermined shape a preform that has been formed of a thermoplastic resin in a bottomed tubular shape.

As an example of blow molding used to mold a preform into a container, liquid blow molding is known. In liquid blow molding, instead of pressurized air, a pressurized liquid is used as a pressurizing medium (pressurizing fluid) supplied into the preform.

Patent Literature 1, for example, describes the technology of liquid blow molding a preform into a container having a predetermined shape with use of a liquid blow molding apparatus including: a mold used for blow molding (hereinafter, called a blow mold) having a cavity in which the preform is to be disposed; a blow nozzle configured to engage with a mouth of the preform disposed in the blow mold; a pressurized liquid supply unit configured to supply a pressurized liquid to a supply path connected to the blow nozzle; and a sealing member configured to open and close the supply path with respect to the blow nozzle, wherein the pressurized liquid is supplied into the preform via the supply path and the blow nozzle by actuating the pressurized liquid supply unit in the state where the sealing member is opened. According to such liquid blow molding, since a content liquid, such as a beverage, to be contained in the container as a final product may be used as the liquid supplied into the preform, the process of filling the content liquid to the container after molding may be omitted. Accordingly, the production process and the configuration of the liquid blow molding apparatus may be simplified

The publications EP2001648A2, WO2014127876A1 and DE102011015666A1 correspond to the preambles of claims 1 and 2.

### CITATION LIST

### Patent Literature

PTL1: JP2013154617A

### SUMMARY

### (Technical Problem)

However, to liquid blow mold the preform, the liquid needs to be pressurized to a pressure high enough to stretch the preform, and a predetermined amount of the pressurized liquid needs to be supplied to the preform. This requires the use of a large-size expensive device, such as a filling plunger including a servo motor as the driving source, as the pressurized liquid supply unit. Furthermore, to prevent diameter increase and deformation of the mouth of the preform due to the supplied pressurized liquid, the use of, for example, a high-pressure air compressor configured to supply pressurized air to space defined on the outer side of the mouth is required. Accordingly, expensive devices are required for liquid blow molding, and this results in the problem of expensive production cost of the apparatus.

The present disclosure has been conceived in view of the above problem, and the present disclosure is to provide low-cost container molding apparatus and container molding method that mold the preform into the container having the predetermined shape and that also omit the process of filling the content liquid into the container after molding.

### (Solution to Problem)

The invention is defined by an apparatus and a method in accordance with independent claims 1 and 2.

### (Advantageous Effect)

According to the present disclosure, the content liquid may be filled into the container while the preform is molded into the container having the predetermined shape by using the simply configured apparatus without having to use a filling plunger including a servo motor as the driving source and a high-pressure air compressor. The present disclosure therefore provides low-cost container molding apparatus and container molding method that mold the preform into the container having the predetermined shape and that also omit the process of filling the content liquid into the container after molding.

### BRIEF DESCRIPTION OF THE DRAWING

In the accompanying drawings:
FIG. 1 schematically illustrates the configuration of a container molding apparatus according to one of embodiments of the present disclosure;
FIG. 2A illustrates a procedure for disposing a preform in a cavity of a mold of FIG. 1, and FIG. 2B illustrates the state where a filling nozzle is engaged with a mouth of the preform disposed in the cavity;
FIG. 3A illustrates the state where an inside of the cavity in which the preform is disposed under a negative pressure by activating a vacuum pump, and FIG. 3B illustrates the state of introducing a content liquid into the preform while stretching the preform to mold the preform into a container having a predetermined shape by the negative pressure;
FIG. 4A illustrates the state where a sealing member is closed to stop the introduction of the content liquid into the preform, and FIG. 4B illustrates the state where operation of the vacuum pump is stopped;
FIG. 5 illustrates a procedure for removing the container after molding from the mold;
FIG. 6 schematically illustrates the configuration of a modification of the container molding apparatus of FIG. 1;
FIG. 7A illustrates a procedure for disposing a preform in a cavity of a mold of FIG. 6, and FIG. 7B illustrates the state where a filling nozzle is engaged with a mouth of the preform disposed in the cavity;
FIG. 8A illustrates the state where the preform has been stretched in the axial direction by a stretching rod, and FIG. 8B illustrates the state where an inside of the cavity in which the preform is disposed under a negative pressure by activating a vacuum pump after the preform has been stretched in the axial direction by the stretching rod;
FIG. 9A illustrates the state of introducing a content liquid into the preform while stretching the preform to mold the preform into a container having a predetermined shape by the negative pressure, and FIG. 9B illustrates the state where a sealing member is closed to stop the introduction of the content liquid into the preform; and
FIG. 10A illustrates the state where the vacuum pump has been stopped and the stretching rod has been withdrawn, and FIG. 10B illustrates a procedure for removing the container after molding from the mold.

### DETAILED DESCRIPTION

The present disclosure will be described in more detail below by illustration with reference to the drawings.

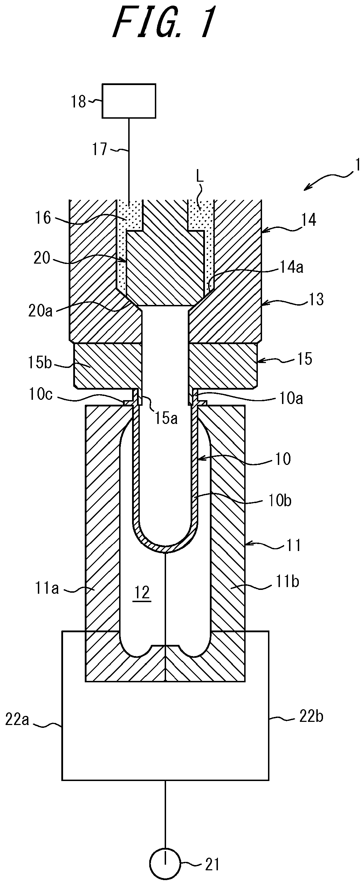

A container molding apparatus 1 of FIG. 1 according to one of embodiments of the present disclosure is configured to produce a container filled with a content liquid L by introducing the content liquid L into a preform 10 while molding the preform 10 formed of a thermoplastic resin into a container having a predetermined shape. A container molding method according to one of embodiments of the present disclosure may be performed by using the container molding apparatus 1.

The container molding apparatus 1 includes a mold 11, which is formed for example as a metal mold. The mold 11 has a cavity 12, whose shape corresponds to the shape of the container after molding. In the illustrated example, the cavity 12 has a bottle shape and is open upward on an upper surface of the mold 11.

The mold 11 may include a pair of split mold pieces 11a and 11b and may be configured to be opened into left and right mold pieces. In this case, the preform 10 may be disposed in the cavity 12 by opening the mold 11, and the container after molding may also be removed from the mold 11 by opening the mold 11.

Additionally, the mold 11 does not necessarily need to have the aforementioned configuration and may adopt a variety of configurations with the cavity 12 in which the preform 10 is to be disposed that allow the preform 10 to be disposed in the cavity 12. For example, the cavity 12 of the mold 11 may have other shapes than the bottle shape, or the mold 11 may be split into three mold pieces.

As the preform 10, a preform formed of a thermoplastic resin, such as polypropylene (PP) and polyethylene terephthalate (PET), that has stretchability when being heated to a predetermined temperature may be used. The preform 10 may be formed in a substantially test tube shape having a cylindrical mouth 10a and a bottomed-cylindrical-shaped main body 10b, for example by molding a thermoplastic resin by injection molding, compression molding, extrusion molding, extrusion-blow molding, or the like. As illustrated, the preform 10 may also includes a neck ring 10c between the mouth 10a and the main body 10b.

Additionally, the preform 10 does not necessarily have the aforementioned shape and may have a variety of shapes depending on the shape of the container after molding. For example, the mouth 10a only has to have a tubular shape and may have other shapes, such as a square tubular shape, other than the cylindrical shape. The main body 10b only has to have a bottomed tubular shape and may have other sectional shapes. Furthermore, a plate-shaped preform formed by a sheet material or the like may also be used.

As the preform 10, a preform having a laminated-layer structure in which a plurality of thermoplastic resin layers is laminated may be adopted besides a preform having a single-layer structure formed by a single thermoplastic resin layer. In this case, the plurality of resin layers may be adhered to each other, or alternatively, the preform 10 may have the laminated structure in which an outer layer and an inner layer are formed of different materials and in which these layers are prevented from adhering to each other or a modified version of the laminated structure in which an adhesive layer is disposed in a strip shape extending in the axial direction between the outer layer and the inner layer. In cases where the preform 10 has the laminated structure without adhesion to each other, the preform 10 may be molded into a delamination container having a predetermined shape by the container molding apparatus 1. Additionally, the preform 10 with the laminated structure is not limited to the aforementioned examples and may have any layer structures.

The preform 10 is heated in another process to a predetermined temperature at which stretchability is achieved and is in this state disposed in the cavity 12 of the mold 11. At this time, as illustrated, the preform 10 is disposed in the cavity 12 of the mold 11 in an upright position in which the neck ring 10c abuts against an upper surface of the mold 11 and in which the mouth 10a protrudes upward from the mold 11.

Above the mold 11, there is provided a nozzle unit 13, which is displaceable in upward and downward directions relative to the mold 11. The nozzle unit 13 includes a main body block 14 and a filling nozzle 15.

The filling nozzle 15 has an integral structure formed of steel, a resin material, or the like that includes a nozzle main body 15a and a large-diameter fix portion 15b, which is formed integrally with the nozzle main body 15a. The filling nozzle 15 is fixed at the fix portion 15b to a lower end of the main body block 14 by a fastening means which is not illustrated.

The nozzle main body 15a is formed in a shape that may be engaged with the mouth 10a of the preform 10. In the illustrated example, the nozzle main body 15a may be engaged with the inner side of the mouth 10a of the preform 10. Additionally, the nozzle main body 15a is disposed co-axially with the cavity 12 of the mold 11.

The main body block 14 is provided inside thereof with a supply path 16, which extends in the vertical direction. The supply path 16 has a lower end connected to the filling nozzle 15. The supply path 16 is also connected to a content liquid containing tank 18 via a pipe 17. The content liquid containing tank 18 is configured to contain the content liquid L that is to be filled in the preform 10 and may be a tank containing (storing) the content liquid L. Thus, the filling nozzle 15 is connected to the content liquid containing tank 18 via the supply path 16 and the pipe 17 so that the content liquid L is supplied from the content liquid containing tank 18.

When the nozzle unit 13 is displaced downward to a predetermined position, as illustrated in FIG. 1, the nozzle main body 15a comes into engagement with the inner side of the mouth 10a of the preform 10 disposed in the cavity 12, thereby connecting the filling nozzle 15 to the mouth 10a of the preform 10. Additionally, a sealing body may further be provided between the filling nozzle 15 and the mouth 10a to provide sealing therebetween.

In the supply path 16, which is a flow path between the content liquid containing tank 18 and the filling nozzle 15, there is disposed a sealing member 20, which is configured to open and close the supply path 16 with respect to the filling nozzle 15. The sealing member 20 is formed in a cylindrical shape extending along the axis of the supply path 16 and is displaceable inside the supply path 16 in the upward and downward directions relative to the main body block 14. The main body block 14 is provided inside thereof with a tapered closing surface 14a. By the sealing member 20 being displaced to its lowermost stroke end and by a tapered surface 20a, which is provided in a lower end of the sealing member 20, coming into abutment with the closing surface 14a, the supply path 16 is closed with respect to the filling nozzle 15, and consequently, communication between the content liquid containing tank 18 and the filling nozzle 15 is blocked by the sealing member 20. On the other hand, by the sealing member 20 being displaced upward and by the tapered surface 20a, which is provided in the lower end of the sealing member 20, coming off from the closing surface 14a, the content liquid containing tank 18 communicates with the filling nozzle 15 via the supply path 16. Thus, when the sealing member 20 is opened in the state where the nozzle main body 15a engages with the mouth 10a of the preform 10, the content liquid L contained in the content liquid containing tank 18 becomes ready to be supplied into the preform 10 through the filling nozzle 15.

A vacuum pump 21 is connected to the cavity 12 of the mold 11.The vacuum pump 21 may depressurize the inside of the cavity 12 to a negative pressure. The negative pressure refers to a pressure lower than an atmospheric pressure. As the vacuum pump 21, which is configured to depressurize the cavity 12 to a predetermined negative pressure, a variety of configurations, such as a rotary vacuum pump and a swing piston vacuum pump, may be adopted.

In the illustrated example, a pair of draw paths 22a and 22b is connected to the vacuum pump 21. One draw path 22a is connected to one split mold piece 11a of the mold 11 to be opened to an inner surface defining the cavity 12 of the split mold piece 11a, and the other draw path 22b is connected to the other split mold piece 11b of the mold 11 to be opened to an inner surface defining the cavity 12 of the split mold piece 11b.

Examples of the vacuum pump 21 that may be used include a vacuum pump capable of reducing the pressure inside the cavity 12 to a negative pressure to the extent where the negative pressure stretches the main body 10b of the preform 10 disposed in the cavity 12 in the axial direction and the radial direction into a shape conforming to the inner surface of the cavity 12. To form sealing space inside the cavity 12, a sealing body or the like is used to provide air-tight contact between a portion of the cavity 12 that is open upward and the preform 10.

The container molding apparatus 1 with the above configuration is configured to produce a container filled with the content liquid L by placing the inside of the cavity 12 in which the preform 10 is disposed under the negative pressure by using the vacuum pump 21 in the state where the sealing member 20 is opened, thereby stretching the preform 10 in the axial direction and the radial direction into the predetermined shape conforming to the inner surface of the cavity 12 by the generated negative pressure and introducing the content liquid L from the content liquid containing tank 18 into the preform 10 through the filling nozzle 15 by a negative pressure generated inside the preform 10 at the time of stretching.

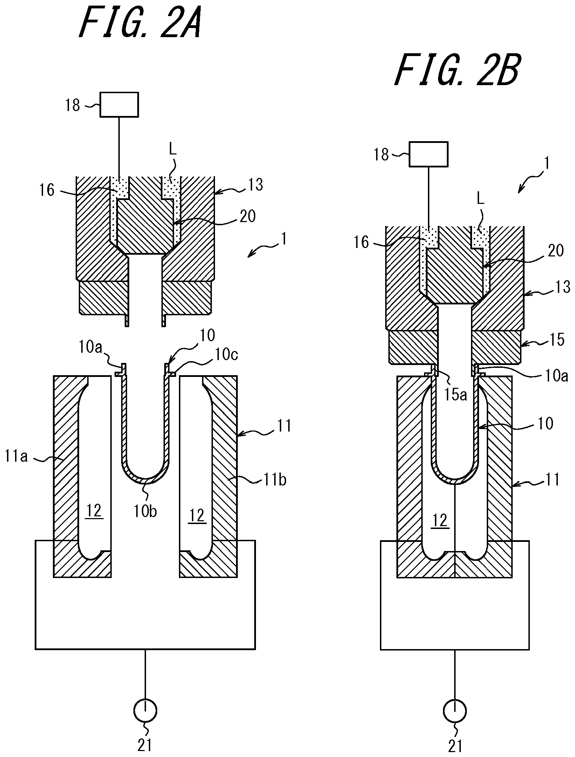

With reference to FIGS. 2A to 5, a description is given of a procedure for molding the preform 10 into the container having the predetermined shape by using the container molding apparatus 1, that is, a container molding method according to one of embodiments of the present disclosure.

Firstly, the preform 10 is heated to a predetermined temperature at which stretchability is achieved by using a heating device such as a heater. After being heated to the predetermined temperature, the preform 10 is disposed in the cavity 12 of the mold 11 by using a conveying device or the like. At this time, as illustrated in FIG. 2A, the preform 10 is disposed in the cavity 12 of the mold 11 in the upright position in which the mouth 10a protrudes upward from the mold 11 by closing the mold 11 from the state where the mold 11 is opened into left and right mold pieces, where the nozzle unit 13 is positioned away and above the mold 11, and where the preform 10 is disposed between the pair of split mold pieces 11a and 11b.

Subsequently, the nozzle unit 13 is displaced downward to a predetermined position, and the nozzle main body 15a of the filling nozzle 15 is engaged with the mouth 10a of the preform 10 disposed in the cavity 12 as illustrated in FIG. 2B. At this time, although the content liquid L is supplied to the supply path 16 from the content liquid containing tank 18, the content liquid L is not supplied to the preform 10 since the sealing member 20 is closed.

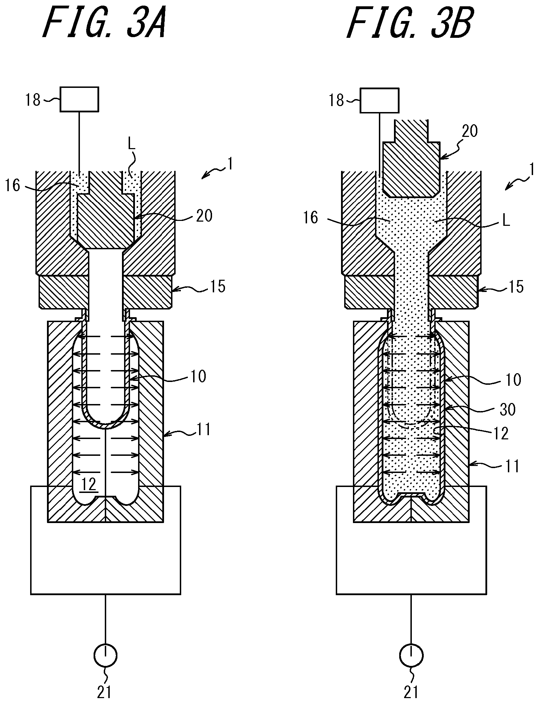

Subsequently, as illustrated in FIG. 3A, the vacuum pump 21 is activated to depressurize the inside of the cavity 12 in which the preform 10 is disposed, that is, space between the inner surface of the cavity 12 and an outer surface of the preform 10, to a predetermined negative pressure. Consequently, the preform 10 is stretched by the negative pressure in the axial direction and the radial direction and molded into the container having the predetermined shape conforming to the inner surface of the cavity 12.

Furthermore, as illustrated in FIG. 3B, the sealing member 20 is opened at the same time as activating the vacuum pump 21 to place the cavity 12 under the negative pressure, thereby introducing the content liquid L supplied from the content liquid containing tank 18 into the preform 10 through the filling nozzle 15 by the negative pressure generated inside the preform 10 at the time of stretching.

Additionally, although in the present embodiment the sealing member 20 is opened to introduce the content liquid L into the preform 10 at the same time as activating the vacuum pump 21 to place the cavity 12 under the negative pressure, the sealing member 20 may be opened immediately before the vacuum pump 21 is activated to place the cavity 12 under the negative pressure, or the sealing member 20 may be opened immediately after the vacuum pump 21 is activated to place the cavity 12 under the negative pressure.

Once the preform 10 has been molded and the content liquid L has been introduced, the preform 10 is molded into the container 30 having the predetermined shape and filled inside with the content liquid L as illustrated in FIG. 3B.

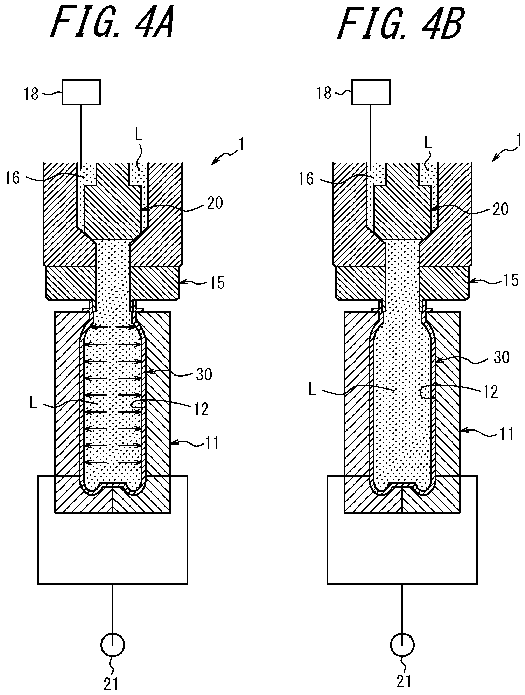

As molding of the preform 10 into the container 30 is completed, the sealing member 20 is closed to stop the supply of the content liquid L to the container 30 as illustrated in FIG. 4A, and at the same time as or immediately before or after that, the operation of the vacuum pump 21 is stopped to return the inside of the cavity 12 to an atmospheric pressure as illustrated in FIG. 4B.

To form head space (a space portion above a liquid surface of the content liquid L) within the container 30 filled with the content liquid L, it is preferable to perform the process of, for example, returning the content liquid L remaining inside the filling nozzle 15 to the content liquid containing tank 18 or discharging the content liquid L remaining inside the filling nozzle 15 to the outside after the sealing member 20 is closed. Thus forming head space within the container 30 prevents the content liquid L from being splashed to the outside from the mouth of the container 30 when the container 30 is removed from the mold 11. Furthermore, since the above process removes the content liquid L from the inside of the filling nozzle 15, the content liquid L is prevented from being splashed to the outside from the filling nozzle 15 when, for example, the container 30 is removed from the mold 11. In the above case, by configuring the sealing member 20 to have a shape that reaches an end of the nozzle main body 15a in the state where the sealing member 20 is closed, the amount of the content liquid L remaining inside the filling nozzle 15 when the sealing member 20 is closed is minimized as much as possible, so that it is further ensured that the content liquid L is prevented from being splashed from the filling nozzle 15 to the outside.

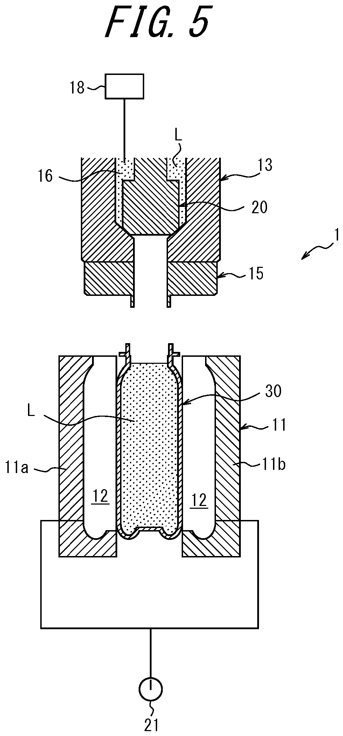

Then, as illustrated in FIG. 5, the nozzle unit 13 is displaced upward, and the mold 11 is opened into left and right mold pieces. By doing so, the container 30 after molding filled with the content liquid L is removed from the mold 11, and this completes the production process of the container 30.

Before the container 30 after molding is removed from the mold 11, the process of attaching a cap to the mouth of the container 30 to close the mouth may be further performed.

Thus, according to the present disclosure, the preform 10 is molded into the container 30 having the predetermined shape by using the simply configured apparatus without having to use a filling plunger including a servo motor as the driving source and a high-pressure air compressor. Furthermore, with the simple apparatus, the content liquid L is introduced into the preform 10 by taking advantage of the negative pressure generated inside the preform 10 while the preform 10 is molded into the container 30. Accordingly, the present disclosure provides the low-cost container molding apparatus 1 and container molding method that mold the preform 10 into the container 30 having the predetermined shape and that also omit the process of filling the content liquid L into the container 30 after molding.

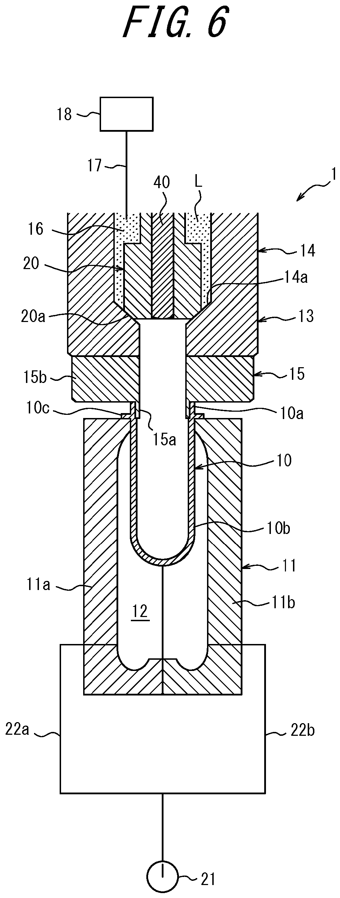

FIG. 6 schematically illustrates the configuration of a modification of the container molding apparatus of FIG. 1. In FIG. 6, members corresponding to those described above are denoted by the same reference numerals, and a repeated description thereof is omitted.

As illustrated in FIG. 6, the container molding apparatus 1 according to the embodiment of the present disclosure may further include a stretching rod 40, which is configured to stretch the preform 10 in the axial direction.

The stretching rod 40 is fitted to an insertion hole formed along the axis of the sealing member 20 in a manner such that the stretching rod 40 is slidable with respect to an inner surface of the insertion hole, and the stretching rod 40 is displaceable in the upward and downward directions (in the axial direction) relative to the sealing member 20. By being displaced downward (toward a bottom of the cavity 12) relative to the sealing member 20, the stretching rod 40 pushes a bottom portion of the main body 10b of the preform 10 disposed in the cavity 12 downward to stretch the main body 10b in the axis (longitudinal) direction within the cavity 12. That is to say, in the container molding apparatus 1 according to the modification in which the stretching rod 40 is provided, the preform 10 disposed in the cavity 12 is stretched in the axial direction by using the stretching rod 40 and is also stretched in the radial direction by the negative pressure inside the cavity 12.

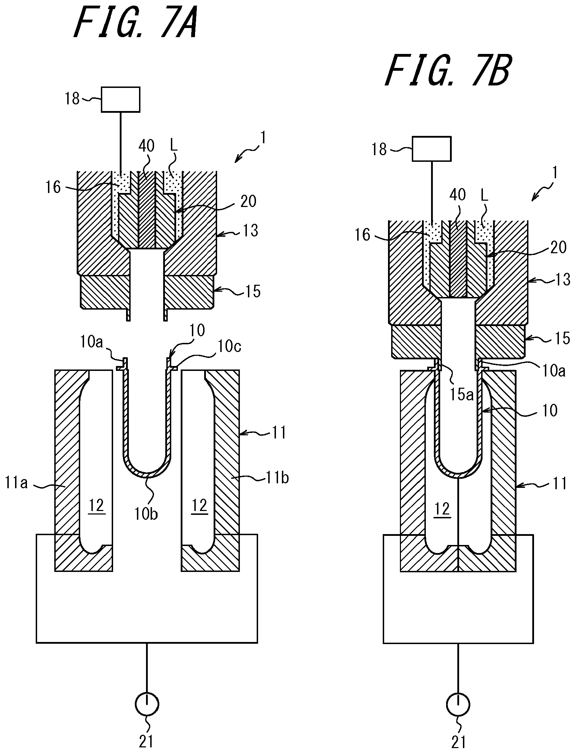

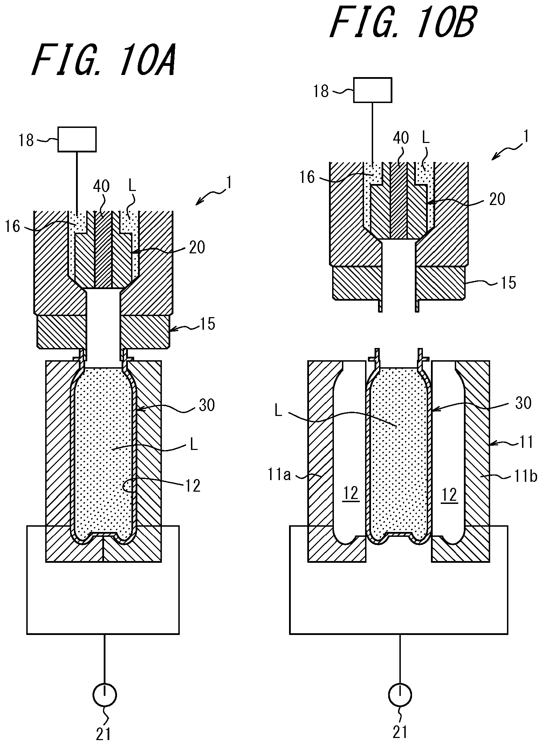

Next, with reference to FIGS. 7A to 10B, a description is given of a procedure for molding the preform 10 into the container having the predetermined shape by using the container molding apparatus 1 according to the modification of FIG. 6, that is, a container molding method according to a modification of the embodiment of the present disclosure.

Firstly, as illustrated in FIG. 7A, the preform 10 which has been heated to a predetermined temperature at which stretchability is achieved by using a heating device such as a heater is disposed in the cavity 12 of the mold 11 by using a conveying device or the like in the state where the mold 11 is opened into left and right mold pieces and where the nozzle unit 13 is positioned away and above the mold 11.

Subsequently, the nozzle unit 13 is displaced downward to a predetermined position, and the nozzle main body 15a of the filling nozzle 15 is engaged with the mouth 10a of the preform 10 disposed in the cavity 12 as illustrated in FIG. 7B.

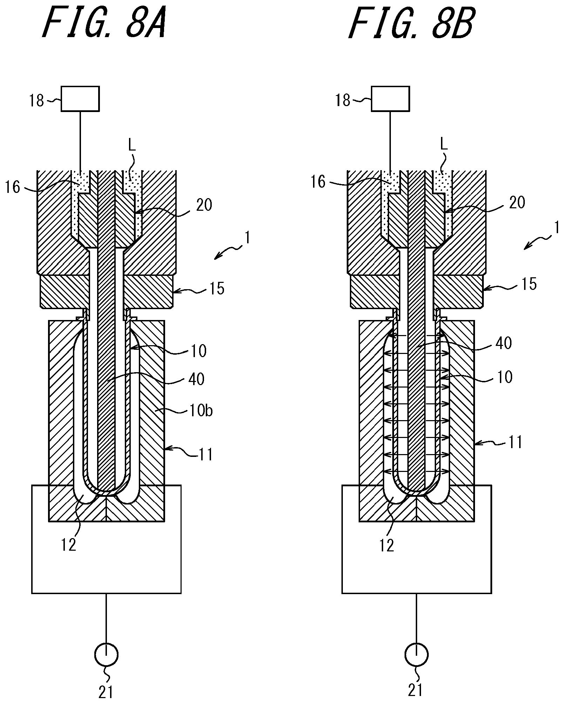

Next, as illustrated in FIG. 8A, the stretching rod 40 is displaced downward to push the bottom portion of the main body 10b of the preform 10 disposed in the cavity 12 downward by the stretching rod 40, thereby stretching the main body 10b in the axis direction within the cavity 12.

After the main body 10b of the preform 10 is stretched to the bottom of the cavity 12, as illustrated in FIG. 8B, the vacuum pump 21 is activated to depressurize the inside of the cavity 12 in which the preform 10 is disposed to a predetermined negative pressure, thereby stretching the preform 10 in the radial direction by the negative pressure.

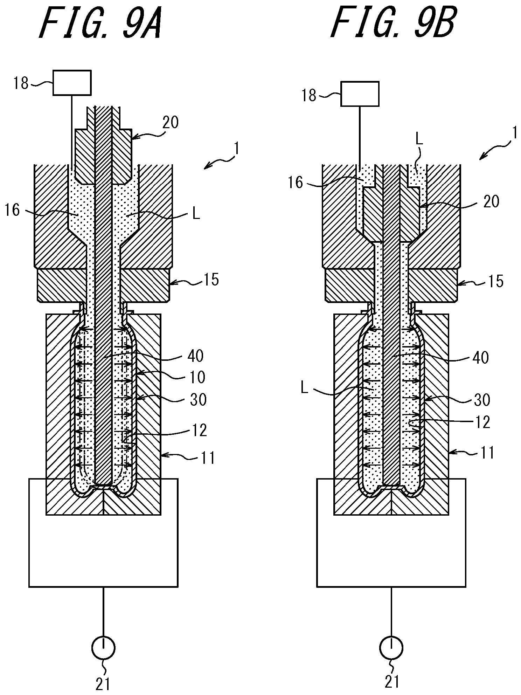

Subsequently, as illustrated in FIG. 9A, the sealing member 20 is opened at the same time as or immediately before or after stretching of the preform 10 to introduce (draw) the content liquid L supplied from the content liquid containing tank 18 into the preform 10 through the filling nozzle 15 by the negative pressure generated inside the preform 10 at the time of stretching.

Additionally, the sealing member 20 may be opened after stretching the preform 10 in the axial direction by the stretching rod 40 and at the same time as or immediately before or after placing the cavity 12 under the negative pressure by the vacuum pump 21, or, the sealing member 20 may be opened before actuating the vacuum pump 21 and at the time as stretching the preform 10 by the stretching rod 40.

Once the preform 10 has been molded and the content liquid L has been introduced, the preform 10 is molded into the container 30 having the predetermined shape and filled inside with the content liquid L as illustrated in FIG. 9A.

As molding of the preform 10 into the container 30 is completed, the sealing member 20 is closed to stop the supply of the content liquid L to the container 30 as illustrated in FIG. 9B, and at the same time as or immediately before or after that, the stretching rod 40 is displaced upward to be withdrawn from the container 30, and the operation of the vacuum pump 21 is stopped to return the inside of the cavity 12 to an atmospheric pressure as illustrated in FIG. 10A. At this time, since the stretching rod 40 is withdrawn from the container 30, the liquid surface of the content liquid L contained within the container 30 is decreased by the volume of the stretching rod 40, and thus, predetermined head space is generated.

Then, as illustrated in FIG. 10B, the nozzle unit 13 is displaced upward, and the mold 11 is opened into left and right mold pieces. By doing so, the container 30 after molding filled with the content liquid L is removed from the mold 11, and this completes the production process of the container 30.

Thus, in the container molding apparatus 1 and the container molding method according to the modifications, the preform 10 is stretched in the axial direction by the stretching rod 40 and is also stretched in the radial direction by the negative pressure in the cavity 12. Accordingly, the preform 10 is molded into the container 30 having the predetermined shape with higher precision. Furthermore, by withdrawing the stretching rod 40 from the container 30 after molding of the container 30, the level of the liquid surface of the content liquid L contained within the container 30, that is, the amount of the content liquid L contained in the container 30, is set appropriately.

Additionally, although in the above modifications the preform 10 is stretched in the radial direction by placing the inside of the cavity 12 under the negative pressure after the preform 10 is stretched in the axial direction by the stretching rod 40, the present disclosure is not limited to the modifications. The preform 10 may be stretched in the radial direction by the negative pressure while being stretched in the axial direction by the stretching rod 40, by placing the inside of the cavity 12 under the negative pressure while displacing the stretching rod 40 downward. Alternatively, the inside of the cavity 12 may be placed under the negative pressure by activating the vacuum pump 21 before the stretching rod 40 starts to be displaced downward.

The present disclosure is not limited to the above embodiments, and various changes may be made without departing the gist of the present disclosure.

For example, in the above embodiments, the content liquid L contained in the content liquid containing tank 18 is introduced into the preform 10 only by the negative pressure generated inside the preform 10 to be stretched. However, for example by disposing the content liquid containing tank 18 at a high position relative to the filling nozzle 15, the content liquid L may be flowed into the preform 10 at a predetermined pressure by taking advantage of the difference in height. Alternatively, the content liquid L contained in the content liquid containing tank 18 may be pressure-fed toward the filling nozzle 15 by using a simply configured pump or the like.

Furthermore, the sealing member 20 does not necessarily need to be configured as described earlier, and the sealing member 20, which is provided in the supply path 16, may adopt a variety of configurations which allow opening and closing between the supply path 16 and the filling nozzle 15.

### REFERENCE SIGNS LIST

- 1: Container molding apparatus
- 10: Preform
- 10a: Mouth
- 10b: Main body
- 10c: Neck ring
- 11: Mold
- 11a: Split mold piece
- 11b: Split mold piece
- 12: Cavity
- 13: Nozzle unit
- 14: Main body block
- 14a: Closing surface
- 15: Filling nozzle
- 15a: Nozzle main body
- 15b: Fix portion
- 16: Supply path
- 17: Pipe
- 18: Content liquid containing tank
- 20: Sealing member
- 20a: Tapered surface
- 21: Vacuum pump
- 22a: Draw path
- 22b: Draw path
- 30: Container
- 40: Stretching rod
- L: Content liquid

## Claims

1. A container (30) molding apparatus that is adapted for molding a preform (10) formed of a thermoplastic resin into a container (30) having a predetermined shape,
the container (30) molding apparatus comprising:
a mold (11) having a cavity (12) in which the preform (10) heated to a predetermined temperature is to be disposed;
a filling nozzle (15) that is connected to a content liquid containing tank (18) containing a content liquid and that is configured to engage with a mouth (10A) of the preform (10) disposed in the cavity (12);
a sealing member (20) that is provided in a flow path between the content liquid containing tank (18) and the filling nozzle (15) and that is configured to open and close the flow path; and
a vacuum pump (21) that is connected to the cavity (12) and that is configured to depressurize an inside of the cavity (12) to a negative pressure,
wherein the apparatus is configured such that by placing the inside of the cavity (12) in which the preform (10) is disposed under the negative pressure by the vacuum pump (21) in a state where the sealing member (20) is opened, the preform (10) is stretched into the predetermined shape conforming to an inner surface of the cavity (12) by the negative pressure, and the content liquid is introduced from the content liquid containing tank (18) into the preform (10) through the filling nozzle (15) by a negative pressure generated inside the preform (10) at the time of stretching,
the apparatus being **characterised in** further comprising a stretching rod (40) configured to stretch the preform (10) in an axial direction, and wherein the apparatus is configured such that by withdrawing the stretching rod (40) from the container (30) after molding of the container (30),
the level of the liquid surface of the content liquid (L) contained within the container (30), that is, the amount of the content liquid (L) contained in the container (30), is set appropriately.

2. A container (30) molding method for molding a preform (10) formed of a thermoplastic resin into a container (30) having a predetermined shape, the container (30) molding method comprising:
disposing the preform (10) heated to a predetermined temperature in a cavity (12) of a mold (11);
engaging a filling nozzle (15) connected to a content liquid containing tank (18) containing a content liquid with a mouth (10A) of the preform (10) disposed in the cavity (12); and
placing an inside of the cavity (12) in which the preform (10) is disposed under a negative pressure in a state where a sealing member (20) configured to open and close a flow path between the content liquid containing tank (18) and the filling nozzle (15) is opened, thereby stretching the preform (10) into the predetermined shape conforming to an inner surface of the cavity (12) by the negative pressure and introducing the content liquid from the content liquid containing tank (18) into the preform (10) through the filling nozzle (15) by a negative pressure generated inside the preform (10) at the time of stretching,
the method being **characterised in** further comprising stretching the preform (10) in an axial direction by a stretching rod (40), wherein by withdrawing the stretching rod (40) from the container (30) after molding of the container (30), the level of the liquid surface of the content liquid (L) contained within the container (30), that is, the amount of the content liquid (L) contained in the container (30), is set appropriately.

## Patentansprüche

1. Eine Vorrichtung zum Formen eines Behälters (30), die dazu angepasst ist, einen aus einem Thermoplastharz gebildeten Vorformling (10) zu einem Behälter (30), der eine vorgegebene Gestalt aufweist, zu formen, wobei die Vorrichtung zum Formen eines Behälters (30) Folgendes beinhaltet:
ein Formwerkzeug (11), das eine Höhlung (12) aufweist, in der der auf eine vorgegebene Temperatur erwärmte Vorformling (10) angeordnet werden soll;
eine Fülldüse (15), die mit einem Inhaltsflüssigkeit enthaltenden Tank (18) verbunden ist, der eine Inhaltsflüssigkeit enthält, und die für den Eingriff mit einer Mündung (10A) des in der Höhlung (12) angeordneten Vorformlings (10) konfiguriert ist;
ein Verschlusselement (20), das in einem Strömungsweg zwischen dem Inhaltsflüssigkeit enthaltenden Tank (18) und der Fülldüse (15) bereitgestellt ist und das dazu konfiguriert ist, den Strömungsweg zu öffnen und zu verschließen; und
eine Vakuumpumpe (21), die mit der Höhlung (12) verbunden ist und die dazu konfiguriert ist, den Druck in einem Inneren der Höhlung (12) auf einen Unterdruck herabzusetzen,
wobei die Vorrichtung derart konfiguriert ist, dass durch Setzen des Inneren der Höhlung (12), in der der Vorformling (10) angeordnet ist, unter Unterdruck durch die Vakuumpumpe (21) in einem Zustand, in dem das Verschlusselement (20) geöffnet ist, der Vorformling (10) durch den Unterdruck in die einer inneren Oberfläche der Höhlung (12) entsprechende vorgegebene Gestalt gestreckt wird und die Inhaltsflüssigkeit aus dem Inhaltsflüssigkeit enthaltenden Tank (18) über die Fülldüse (15) durch einen zur Zeit des Streckens in dem Vorformling (10) erzeugten Unterdruck in den Vorformling (10) eingebracht wird,
wobei die Vorrichtung **dadurch gekennzeichnet ist, dass** sie ferner eine Streckstange (40) beinhaltet, die dazu konfiguriert ist, den Vorformling (10) in einer Axialrichtung zu strecken, und wobei die Vorrichtung derart konfiguriert ist, dass durch Herausziehen der Streckstange (40) aus dem Behälter (30) nach dem Formen des Behälters (30) das Niveau der Flüssigkeitsoberfläche der in dem Behälter (30) enthaltenen Inhaltsflüssigkeit (L), das heißt die Menge der in dem Behälter (30) enthaltenen Inhaltsflüssigkeit (L), passend eingestellt wird.

2. Ein Verfahren zum Formen eines Behälters (30) zum Formen eines aus einem Thermoplastharz gebildeten Vorformlings (10) zu einem Behälter (30), der eine vorgegebene Gestalt aufweist, wobei das Verfahren zum Formen eines Behälters (30) Folgendes beinhaltet:
Anordnen des auf eine vorgegebene Temperatur erwärmten Vorformlings (10) in einer Höhlung (12) eines Formwerkzeugs (11);
Ineingriffbringen einer Fülldüse (15), die mit einem Inhaltsflüssigkeit enthaltenden Tank (18), der eine Inhaltsflüssigkeit enthält, verbunden ist, mit einer Mündung (10A) des in der Höhlung (12) angeordneten Vorformlings (10); und
Setzen eines Inneren der Höhlung (12), in der der Vorformling (10) angeordnet ist, unter einen Unterdruck in einem Zustand, in dem ein zum Öffnen und Verschließen eines Strömungswegs zwischen dem Inhaltsflüssigkeit enthaltenden Tank (18) und der Fülldüse (15) konfiguriertes Verschlusselement (20) geöffnet ist, wodurch der Vorformling (10) durch den Unterdruck in die einer inneren Oberfläche der Höhlung (12) entsprechende vorgegebene Gestalt gestreckt wird und die Inhaltsflüssigkeit aus dem Inhaltsflüssigkeit enthaltenden Tank (18) über die Fülldüse (15) durch einen zur Zeit des Streckens in dem Vorformling (10) erzeugten Unterdruck in den Vorformling (10) eingebracht wird,
wobei das Verfahren **dadurch gekennzeichnet ist, dass** es ferner das Strecken des Vorformlings (10) in einer Axialrichtung durch eine Streckstange (40) beinhaltet, wobei durch Herausziehen der Streckstange (40) aus dem Behälter (30) nach dem Formen des Behälters (30) das Niveau der Flüssigkeitsoberfläche der in dem Behälter (30) enthaltenen Inhaltsflüssigkeit (L), das heißt die Menge der in dem Behälter (30) enthaltenen Inhaltsflüssigkeit (L), passend eingestellt wird.

## Revendications

1. Un appareil de moulage de conteneur (30) qui est conçu pour mouler une préforme (10) formée d'une résine thermoplastique en un conteneur (30) ayant un profil prédéterminé, l'appareil de moulage de conteneur (30) comprenant :
un moule (11) ayant une cavité (12) dans laquelle la préforme (10) chauffée à une température prédéterminée doit être disposée ;
une buse de remplissage (15) qui est raccordée à un réservoir contenant un liquide de contenu (18) contenant un liquide de contenu et qui est configuré pour se mettre en prise avec une embouchure (10A) de la préforme (10) disposée dans la cavité (12) ;
un élément d'étanchéité (20) qui est prévu sur un trajet d'écoulement entre le réservoir contenant un liquide de contenu (18) et la buse de remplissage (15) et qui est configuré pour ouvrir et fermer le trajet d'écoulement ; et
une pompe à vide (21) qui est raccordée à la cavité (12) et qui est configurée pour dépressuriser un intérieur de la cavité (12) à une pression négative,
l'appareil étant configuré de telle sorte qu'en plaçant l'intérieur de la cavité (12) dans laquelle la préforme (10) est disposée sous la pression négative de la pompe à vide (21) dans un état où lequel l'élément d'étanchéité (20) est ouvert, la préforme (10) est étirée dans le profil prédéterminé se conformant à une surface interne de la cavité (12) par la pression négative, et le liquide de contenu est introduit à partir du réservoir contenant un liquide de contenu (18) dans la préforme (10) à travers la buse de remplissage (15) par une pression négative générée à l'intérieur de la préforme (10) au moment de l'étirage,
l'appareil étant **caractérisé en ce qu'**il comprend en outre une tige d'étirage (40) configurée pour étirer la préforme (10) dans une direction axiale, et l'appareil étant configuré de telle sorte que, en retirant la tige d'étirage (40) du conteneur (30) après le moulage du conteneur (30), le niveau de la surface liquide du liquide de contenu (L) contenu à l'intérieur du conteneur (30), c'est-à-dire la quantité de liquide de contenu (L) contenu dans le conteneur (30), est réglé de façon appropriée.

2. Un procédé de moulage de conteneur (30) pour mouler une préforme (10) formée d'une résine thermoplastique en un conteneur (30) ayant un profil prédéterminé, le procédé de moulage de conteneur (30) comprenant :
le fait de disposer la préforme (10) chauffée à une température prédéterminée dans une cavité (12) d'un moule (11) ;
le fait de mettre en prise une buse de remplissage (15) raccordée à un réservoir contenant un liquide de contenu (18) contenant un liquide de contenu avec une embouchure (10A) de la préforme (10) disposée dans la cavité (12) ; et
le fait de placer un intérieur de la cavité (12) dans laquelle la préforme (10) est disposée sous une pression négative dans un état où un élément d'étanchéité (20) configuré pour ouvrir et fermer un trajet d'écoulement entre le réservoir contenant un liquide de contenu (18) et la buse de remplissage (15) est ouvert, étirant ainsi la préforme (10) dans le profil prédéterminé se conformant à une surface interne de la cavité (12) par la pression négative et introduire le liquide de contenu à partir du réservoir contenant un liquide de contenu (18) dans la préforme (10) à travers la buse de remplissage (15) par une pression négative générée à l'intérieur de la préforme (10) au moment de l'étirage,
le procédé étant **caractérisé en ce qu'**il comprend en outre l'étirage de la préforme (10) dans une direction axiale par une tige d'étirage (40), le niveau de la surface liquide du liquide de contenu (L) contenu à l'intérieur du conteneur (30), c'est-à-dire la quantité du liquide de contenu (L) contenu dans le conteneur (30), étant réglé de façon appropriée en retirant la tige d'étirage (40) du conteneur (30) après le moulage du conteneur (30).
